# FASCICULE DE BREVET EUROPEEN

(11) **EP 2 417 072 B1**
(45) Date de publication et mention de la délivrance du brevet: **11.07.2018**
(21) Numéro de dépôt: 10723204.3
(22) Date de dépôt: 06.04.2010
(51) Int. Cl.: C03B 29/08, F24C 7/06, F24C 15/22, C03B 23/023, F27D 99/00

(54) **FOUR ET DISPOSITIF DE CHAUFFAGE COMPRENANT UNE BARRIERE THERMIQUE ET PROCÉDÉ DE CHAUFFAGE ASSOCIÉ AVEC LEDIT FOUR**
OFEN UND HEIZVORRICHTUNG MIT WÄRMESPERRE SOWIE HEIZVERFAHREN MIT DIESEM OFEN
FURNACE AND HEATING DEVICE COMPRISING A THERMAL BARRIER AND A HEATING METHOD ASSOCIATED WITH SAID FURNACE

(30) Priorité: 08.04.2009 FR 0952306
(43) Date de publication de la demande: 15.02.2012
(73) Titulaire: Saint-Gobain Glass France, 92400 Courbevoie (FR)
(72) Inventeur: FANTON, Xavier, F-93600 Aulnay Sous Bois (FR); DELFORGE, Christophe, F-60150 Chevincourt (FR); MACHURA, Christophe, F-60150 Chevincourt (FR); BERARD, Stéphane, F-60250 Mouy (FR)
(74) Mandataire: Saint-Gobain Recherche
(86) Numéro de dépôt international: PCT/FR2010/050653
(87) Numéro de publication internationale: WO 2010/116082

(56) Documents cités:
- CH-A5- 625 629
- JP-A- 60 038 534
- US-A- 3 490 405
- US-A1- 2005 034 850

## Description

L'invention concerne un four comprenant une barrière thermique capable d'orienter la chaleur dans une direction souhaitée, vers un objet à chauffer.

Les fours contiennent au moins une source de chaleur destinée à chauffer un objet. La source de chaleur a naturellement tendance à chauffer dans toutes les directions. Même si de la chaleur revient indirectement vers l'objet à chauffer par réflexion ou par le rayonnement des parois du dispositif, on perd nécessairement une partie importante de la chaleur produite en ne concentrant pas toute la chaleur produite vers l'objet à chauffer. Ce problème se pose dans tout type de dispositif de chauffage en général et notamment dans les fours de chauffage de verre. On veut aussi améliorer la rapidité de chauffage et si possible, baisser les températures de fonctionnement sans diminution d'efficacité. Les améliorations apportées au dispositif ne doivent pas s'accompagner d'inconvénients tels qu'une diminution du volume utile ou une dégradation de qualité de production. En particulier, dans un but d'économies d'énergies, on souhaite améliorer le rendement thermique de fours de bombage par gravité de feuilles de verre.

Les fours comprennent une source de chauffage qui peut être une flamme ou une résistance électrique. Dans le cas du chauffage de feuilles de verre défilant dans un four tunnel en vue de les bomber, on peut citer les WO2007138214 et WO2006095007 qui enseignent l'usage de résistances électriques placées en voûte de four. Ces résistances sont placées entre la brique réfractaire du four et l'objet à chauffer (feuilles de verre transportées sur chariots). Rien de particulier n'a été prévu pour diriger le rayonnement des résistances vers le verre, de sorte que c'est essentiellement la paroi du four qui joue ce rôle dans une certaine mesure.

Le GB2201670 enseigne des éléments réflecteurs en céramique du type aluminosilicate placés après le verre par rapport aux éléments chauffants, de manière à rediriger le rayonnement vers le verre.

Le EP0659697 enseigne des écrans réflecteurs placés verticalement pour limiter l'étalement du rayonnement. Ces éléments peuvent être montés ou baissés. Ils sont constitués de fibres Fiberfrax (aluminosilicates) ou de composites silice, SiC, Si₃N₄ ou d'acier associé à un aluminosilicate fibreux du type Fiberfrax. Les panneaux de type Fiberfrax sont faciles à couper avant mise en place, mais ils deviennent cassants et friables après la première chauffe. De plus, ils émettent des fumées lors de la première chauffe (disparition des liants organiques). Le mode de fixation du Fiberfrax sur l'acier n'est pas mentionné. Aucun écran n'est placé derrière la source de chaleur.

Le US7331198 décrit l'association d'un élément chauffant avec une plaque en céramique et une plaque d'égalisation des températures. La plaque céramique est située derrière le fil électrique chauffant par rapport au verre et la plaque d'égalisation est située entre le fil chauffant et le verre. La plaque céramique sert de support au fil chauffant. La plaque d'égalisation sert à homogénéiser la température du rayonnement. Elle fait écran rayonnant.

Le EP0133847 enseigne un chauffage avec des tubes à quartz et une paroi en aluminocéramique fibreuse à proximité du tube émetteur infra-rouge.

Le US2005/034850 enseigne un réflecteur situé entre la paroi d'un four et un objet à chauffer. Le réflecteur peut être en métal et peut être revêtu d'une céramique mais de sorte que celle-ci ne soit pas orientée vers l'objet à chauffer.

Le JP60038534 enseigne un réflecteur utilisé entre 200 à 400 °C, comprenant un film contenant un oxyde sur un métal. Ce réflecteur présente une émissivité faible (inférieure à 0,4-0,5) pour les longueurs d'onde inférieures à 4-5 µm et une forte émissivité (supérieure à 0,85-0,90) pour les longueurs d'onde supérieures à 4-5 µm. Le rayonnement infrarouge obtenu procure un effet de chaleur agréable pour le corps humain qui est plus sensible aux longueurs d'onde supérieures à 4 µm. La détérioration du film par la chaleur est évitée grâce à l'usage comme liant d'une peinture contenant un polymère NiC, SiC, ladite peinture étant résistante aux températures de l'ordre de 300°C. A 300°C, un métal inoxydable ordinaire est stable du point de vue de son émissivité.

Le bombage du verre nécessite d'amener celui-ci à une température comprise entre 500°C et 800°C. Pour conférer au verre cette température, il est nécessaire que le système de chauffage soit au moins 200°C plus chaud que la température visée pour le verre. Ceci signifie que la longueur d'onde du pic d'émission du système de chauffage sera nécessairement inférieure à 3,1 µm (longueur d'onde correspondant à la température de 700°C) et même plutôt inférieur à environ 2,8 µm (longueur d'onde correspondant à la température de 800°C). Selon la présente invention, on a cherché à orienter le rayonnement des résistances électriques vers l'objet à chauffer.

Afin d'orienter le plus possible le rayonnement de résistances électriques vers un objet, les inventeurs ont d'abord pensé à placer derrière ces résistances une plaque en céramique du type Monalite ou une plaque en acier de type 316Ti pour faire office de barrière thermique. Ces deux matériaux sont en effet susceptibles de bien renvoyer les rayonnements thermiques en raison de leur réflectivité importante. Cependant, une très faible influence sur l'efficacité du chauffage a été constatée. De plus, la plaque en céramique avait tendance à s'effriter et des particules s'en étant échappées ont été retrouvées sur les objets à chauffer. On a également constaté que même si la plaque métallique tenait bien aux températures de test (de l'ordre de 650°C), sa surface avait tendance à s'assombrir et à devenir rugueuse sous l'effet de l'oxydation superficielle.

L'usage de matériaux friables, courants dans le domaine des réfractaires pour four, est problématique puisque les particules s'en détachant peuvent polluer les objets à chauffer et posent un problème sanitaire par rapport aux personnes affectées à leur fonctionnement.

On a maintenant trouvé que la combinaison d'un matériau céramique et d'un matériau métallique pouvait apporter une amélioration significative à l'efficacité de chauffage. Le matériau métallique apporte la solidité et la cohérence d'un support ainsi que sa facilité d'usinage et de mise en forme, alors que le matériau céramique apporte sa grande réflectivité et stabilité thermique. Cette association permet de plus d'utiliser la technologie du dépôt par pulvérisation dans une flamme, ce qui mène à un revêtement céramique de bonne intégrité ne s'effritant pas et adhérant bien au substrat. Un autre avantage de la barrière composite selon l'invention est sa faible épaisseur, si l'on compare avec des plaques en céramique monolithique, ce qui libère une place appréciable dans un four. Cette faible masse se traduit aussi par une faible inertie thermique, ce qui est avantageux dans les phases de modification de température.

Ainsi, l'invention concerne un four pour chauffer un objet en un emplacement comprenant une paroi en céramique réfractaire et une source de chaleur, comprenant au moins une plaque métallique revêtue d'une couche adhérente d'un matériau céramique sur une de ses faces principales placée entre ladite paroi et ladite source, la couche adhérente étant située vis-à-vis de la source.

L'objet de l'invention comprend une feuille de verre. La feuille de verre peut être disposée sur un moule de bombage par gravité, ledit moule pouvant être du type cadre, notamment du type squelette. Après le bombage par gravité, le bombage peut être complété par une étape de bombage par pressage.

La plaque est en un métal tenant aux températures d'utilisation. Dans le cas d'un four de bombage de feuilles de verre, on peut utiliser un acier comme un acier inoxydable du type acier austénitique, ferritique ou martensitique comme le 316Ti, 304L, 316L, 441, NS30, un métal ou alliage d'un métal réfractaire comme le Nickel, notamment un Inconel. La plaque métallique non revêtue a généralement une épaisseur allant de 0,5 à 5 mm.

La couche adhérente consiste en un matériau inorganique qui est une céramique. La céramique adhère à la surface de la plaque en métal, le cas échéant par l'intermédiaire d'une couche d'accrochage intermédiaire, en conséquence de son procédé de déposition qui est soit le dépôt par une torche à plasma (en anglais : Plasma spray ou Thermal spray) soit l'évaporation thermique assistée par faisceau d'électrons (en anglais : Electron Beam Evaporation ou e-beam evaporation). Cette bonne adhésion repose en partie sur une interdiffusion d'éléments chimiques du substrat vers le revêtement et vice versa. Le revêtement est particulièrement adhérent et résistant sur la plaque métallique et tient bien aux chocs thermiques générés par les arrêts et remises en température du dispositif. Cette adhérence est généralement d'au moins 10 MPa. La dureté Vickers est généralement supérieure à 500 Hv0.3 et plus généralement comprise entre 600 et 900 Hv0.3. La céramique de la couche, au moins en sa surface libre, présente de préférence une forte réflexion totale aux infra-rouge, notamment supérieure à 30% entre 2 µm et 5 µm. Ainsi, le matériau de la couche réfléchit plus les infra-rouges que celui de la céramique de la paroi. Sa surface, c'est-à-dire sa surface libre (non revêtue d'un autre matériau), ou même sa masse entière peut comprendre ou être à base d'alumine ou de zircone, notamment de zircone dopée à l'yttrium ou au calcium ou au magnésium. L'expression « à base de » signifie que le matériau contient plus de 50% en poids par exemple de zircone ou de zircone dopée. La zircone est un matériau préféré notamment du fait de son fort coefficient de dilatation thermique qui lui permet de bien suivre la déformation du substrat métallique sous l'effet des changements de température. La céramique présente de préférence une épaisseur comprise entre 20 µm et 3 mm. La surface de la céramique peut être polie manuellement ou à l'aide d'une rectifieuse mécanique afin d'augmenter la réflexion infra-rouge ou de rendre celle-ci plus directionnelle. Dans le cas d'un dépôt de la céramique par projection dans une flamme, il est recommandé de déposer au préalable sur le substrat métallique une couche d'accrochage notamment du type alliage de Ni-Cr-AI, dit « Nicral ». Cette couche d'accrochage présente généralement une épaisseur comprise entre 10 µm et 500 µm. On considère que cette couche d'accrochage ne fait pas partie de la « couche d'un matériau céramique ». La couche d'accrochage peut être déposé par tout procédé adapté, notamment par une torche à plasma, ou par évaporation thermique assistée par faisceau d'électrons, ou par PVD. En pratique, il est plus simple de déposer la couche d'accrochage et la couche céramique par le même procédé, en particulier par torche à plasma.

La source de chaleur peut être toute source pouvant notamment se trouver dans un four, comme une flamme ou une résistance électrique. Il peut s'agir d'une résistance électrique dite « résistance boudinée » composée d'un fil métallique enroulé autour d'un tube composé d'un matériau céramique. La source de chaleur peut aussi être un pavé céramique radiant (dit PCR en français, ou ceramic infrared radiator ou ceramic infrared heater). Un PCR est un bloc en céramique contenant une résistance électrique. La céramique du PCR sert à maintenir et protéger la résistance électrique. La résistance électrique dans le PCR peut être une résistance spiralée, en forme de ressort à spirale ou ondulée dans un plan.

La plaque métallique revêtue est placée entre la paroi du four et la source de chaleur. Ceci signifie en particulier qu'il existe une normale à la paroi passant par ladite plaque revêtue puis par ladite source quand on part de la paroi. Cette normale passe ensuite par l'emplacement prévu pour chauffer l'objet et donc le cas échéant par l'objet lui-même. La normale ne rencontre aucun élément solide entre la paroi et la plaque quand on part de la paroi. La normale ne rencontre aucun élément solide entre la source de chaleur et l'emplacement de l'objet et même l'objet, quand on part de la source de chaleur.

La plaque peut comprendre des orifices, notamment à but de fixation à la paroi du four ou pour le passage de connections électriques ou dans un but de solidarisation avec la source ou pour permettre une visée directe avec un appareil de mesure optique de la température (pyromètre).

De préférence, on laisse un espace entre la plaque revêtue et la source de chaleur. Cet espace, rempli d'air ambiant, constitue un matelas d'air isolant. On peut solidariser la plaque et la source de chaleur lorsque celle-ci est solide, notamment dans le cas d'un PCR, par un système d'entretoises. Ainsi, de préférence, on ménage un « premier » espace libre entre un « premier » côté de la source et la plaque revêtue allant de 2 mm à 100 mm et de préférence de 10 mm à 60 mm. Ce premier espace libre correspond à celui se trouvant au dos de la source par rapport à l'objet à chauffer.

On peut entourer la source de chaleur d'un ensemble de plaques selon l'invention sauf d'un côté (côté dit « ouvert »), pour que la chaleur soit mieux canalisée dans la direction du côté ouvert correspondant à la direction de chauffage souhaitée. Cette configuration permet de mieux confiner l'éventuel matelas d'air présent entre la source de chaleur et la plaque. Dans ce cas, le premier espace libre entre un premier côté de la source et la plaque revêtue présente la distance déjà donnée (2 mm à 100 mm et de préférence de 10 mm à 60 mm), les autres espaces libres entre la plaque et la source sur les autres côtés non ouverts étant généralement inférieurs audit premier espace libre, notamment inférieurs à 8 mm.

De préférence, la plaque métallique est revêtue d'un matériau céramique sur ses deux faces principales.

Le four selon l'invention peut notamment être un four tunnel. En particulier, l'objet à chauffer peut être déplacé à l'intérieur du four tunnel.

La source et la plaque revêtue (placée entre la paroi du four et la source) forment un module. Notamment la source et la plaque peuvent être solidarisées ensemble par exemple par un système d'entretoises. Le four selon l'invention peut comprendre une pluralité de tels modules juxtaposés. Ces modules peuvent être alimentés indépendamment l'un de l'autre de façon à tenir compte de la position de l'objet à chauffer et de la forme de l'objet à chauffer. Si l'objet se déplace dans le four, comme dans un four tunnel, on peut ainsi asservir l'alimentation de la source (notamment l'alimentation électrique lorsqu'il s'agit d'alimenter des résistances électriques) en fonction de la position de l'objet dans le four.

La plaque selon l'invention est au moins placée entre la source et la paroi du four. Elle peut aussi, en plus, grâce à une forme particulière qu'on lui donne, entourer au moins partiellement la source sur ses côtés latéraux de façon à orienter le rayonnement latéral vers l'emplacement de l'objet à chauffer. Cette forme particulière peut être conférée à la plaque (avant application du revêtement céramique) par emboutissage, pliage, ou par assemblage, notamment par soudure, de différents morceaux de plaques. La plaque au sens de l'invention peut aussi être un ensemble de plaques dont une est « de fond », entre la source et la paroi, et les autres sont « latérales », c'est-à-dire situées autour de la source. Bien entendu, on garde libre l'espace situé entre la source et l'emplacement de l'objet à chauffer.

Les cotés ou parois latérales laissent généralement une empreinte thermique sur le verre (découlant de l'absence d'objet entre elles et le verre). Cette empreinte est visible par la technique de polariscopie. Selon cette technique, un filtre polarisant (que l'on met sur le passage de la lumière pour la polariser) est placé entre une source lumineuse et un vitrage réalisé selon l'invention (avec côtés ou parois latérales) ; un second filtre polarisant est placé entre le vitrage et l'observateur. La direction de polarisation du second filtre est orienté à 90° par rapport à la direction de polarisation du premier filtre. Si des côtés ou parois latérales ont été utilisées, alors des lignes de contraste apparaissent dans la zone de vitrage traité. Ces lignes sont en fait la marque découlant de la température plus froide de ces parois.

Ainsi, un module peut par exemple comprendre une source de chaleur (notamment du type résistance électrique ou PCR) et des plaques latérales (disposées perpendiculairement à la paroi du four) et une plaque de fond (placée entre la source et la paroi du four), chacune des plaques étant selon l'invention, c'est-à-dire métallique et revêtue d'une couche adhérente d'un matériau céramique. Les plaques latérales peuvent par exemple être au nombre de quatre. Le revêtement est situé sur la face principale de la plaque vis-à-vis de la source. Un revêtement de même nature peut aussi être placé sur l'autre face principale de la plaque. On peut notamment avoir la combinaison selon laquelle les plaques latérales sont recouvertes sur une seule face et la plaque de fond est recouverte sur une seule face. On peut aussi avoir la combinaison selon laquelle les plaques latérales sont recouvertes sur une seule face et la plaque de fond est recouverte sur ses deux faces. On peut aussi avoir la combinaison selon laquelle les plaques latérales sont recouvertes sur leurs deux faces et la plaque de fond est recouverte sur une seule face. On peut aussi avoir la combinaison selon laquelle les plaques latérales sont recouvertes sur leurs deux faces et la plaque de fond est recouverte sur ses deux faces.

Dans le cas de modules juxtaposés, on peut généralement avoir des plaques latérales servant à la fois à deux modules juxtaposés, auquel cas elles sont revêtues de la céramique sur leurs deux faces.

L'invention concerne également l'utilisation d'une façon générale d'une plaque métallique revêtue d'une couche adhérente (notamment déposée par torche à plasma) d'un matériau céramique sur une de ses faces principales pour orienter les rayonnements thermiques.

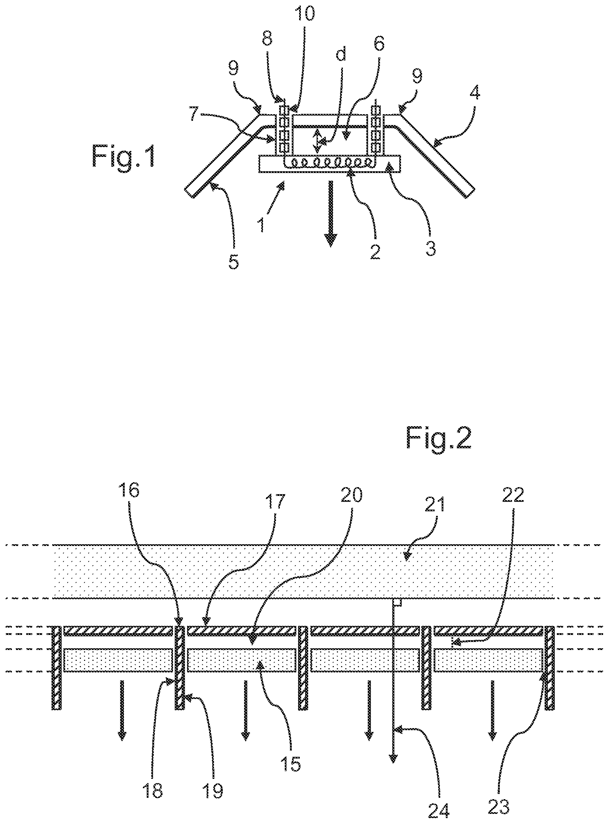

L'invention concerne également un dispositif de chauffage comprenant une source de chaleur, une plaque métallique revêtue d'une couche adhérente d'un matériau céramique sur une de ses faces principales, la couche adhérente étant située vis-à-vis de la source, ladite plaque entourant ladite source de chaleur, au moins une tige de fixation reliée à la source de chaleur traversant ladite plaque, ladite plaque étant en plusieurs parties et étant assemblable autour de ladite tige de fixation par au moins un orifice, le périmètre dudit orifice appartenant à différentes parties de ladite plaque. Un tel dispositif (ou module) est particulièrement utile pour diriger le rayonnement de chaleur vers l'objet à chauffer. L'expression « entourer la source de chaleur » signifie que cette source est entièrement incluse dans le volume délimité par les surfaces internes de la plaque métallique, comme c'est d'ailleurs le cas des dispositifs des figures 1 et 2 décrites plus loin. Ce dispositif est en plusieurs parties assemblables de façon à être facile à monter et démonter, et aussi de façon à pouvoir être monté sur un four qui au départ n'était pas prévu pour le recevoir. L'assemblage des différentes parties de la plaque peut se faire par un système de rainure / languette ou tout autre système mécanique par exemple du type vis / boulon. La plaque métallique comprend au moins un orifice, généralement deux, permettant le passage d'au moins une tige de fixation à la paroi (ce terme devant être pris dans son sens le plus large : voute, sole, paroi latérale, etc) du four. Cet orifice est partagé entre différentes parties de la plaque métallique, de sorte qu'il n'est formé que lorsque le dispositif est assemblé. Cela permet de monter ou démonter la plaque métallique sans avoir à toucher à la tige, puisque l'orifice se fait ou se défait autour de celle-ci. Ainsi, quand on désassemble la plaque, on voit que le périmètre (ou contour) de l'orifice est partagé entre différentes parties. Les tiges de fixation peuvent servir de conducteur électrique pour alimenter la source. Dans ce cas, elles peuvent être au nombre de deux. Ainsi, l'invention concerne également un dispositif de chauffage comprenant une source de chaleur, une plaque métallique revêtue d'une couche adhérente d'un matériau céramique sur une de ses faces principales, ladite plaque entourant ladite source de chaleur, au moins une tige de fixation reliée à la source de chaleur traversant ladite plaque, ladite plaque étant en plusieurs parties et étant assemblable autour de ladite tige de fixation par au moins un orifice, le périmètre dudit orifice appartenant à différentes parties de ladite plaque. La couche adhérente est placée du côté de la plaque vis-à-vis de la source. Notamment, la source de chaleur peut-être électrique, au moins deux tiges de fixation étant reliées à la source de chaleur et traversent la plaque (à l'état assemblé), les au moins deux tiges conduisant l'électricité consommée par la source de chaleur.

L'invention concerne également un procédé de chauffage d'un objet assuré par le four ou le dispositif selon l'invention. Le chauffage peut notamment servir au bombage par gravité d'une feuille de verre posée sur un cadre de bombage. Notamment dans cette application, la plaque métallique revêtue est généralement à une température comprise entre 700 et 1000°C.

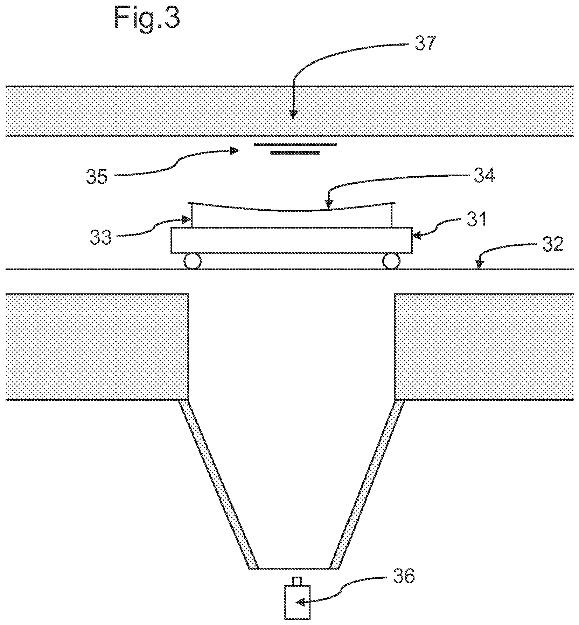

A titre d'exemples on a comparé l'efficacité de la barrière composite selon l'invention avec une plaque en Monalite (aluminosilicate) d'épaisseur égale à 20 mm d'une part et une plaque en acier 316 non revêtue d'épaisseur égale à 2 mm d'autre part, toutes géométries égales par ailleurs. La source était un PCR placé vis-à-vis d'une feuille de verre. La barrière thermique selon l'invention comprenait une plaque d'inox 316Ti et un revêtement de zircone situé du côté du PCR. Le dispositif de mesure était celui de la figure 3. Le four comprenait des moyens de chauffage d'ambiance (résistances boudinées) à 600°C et un PCR. Des écrans étaient placés entre les résistances boudinées et le verre pour éviter le rayonnement direct. De cette manière le verre est soumis au seul rayonnement direct du PCR. La distance entre le verre et le PCR était de 100 mm. La distance entre la plaque et le PCR était de 20 mm. Le PCR était alimenté par 1200 Watts de puissance électrique. Une fois l'équilibre thermique atteint, on a mesuré la température de la feuille de verre chauffée. Le tableau 1 rassemble les résultats.

**Tableau 1**

| **Nature de la plaque** | **Température à l'équilibre** |
|---|---|
| Absence de plaque (comparatif) | 656 °C |
| Inox 316Ti (comparatif) | 660 °C |
| Céramique en Monalite (comparatif) | 654 °C |
| Inox 316Ti revêtu de Zircone | 664,5 °C |

La figure 1 représente un ensemble solidaire comprenant une source et une barrière selon l'invention. La source est un PCR 1 comprenant une résistance électrique 2 dans une gangue de céramique 3. La barrière thermique comprend une plaque 4 en acier inox 316Ti et la face de cette plaque dirigée vers le PCR est revêtue d'une couche 5 en zircone déposée par plasma spray. Un certain espace libre d est maintenu entre le PCR et la plaque afin de constituer une lame d'air 6 isolante entre le PCR et la plaque revêtue. La distance d (ou espace libre) entre la plaque et le PCR ainsi que la solidarisation de ces deux composants est assurée par des entretoises 7. Les deux fils électriques 8 en contact avec la résistance à l'intérieur du PCR passent au travers d'orifices ménagés dans la plaque (ces orifices sont percés dans le métal avant le dépôt de la couche céramique). Ces fils électriques sont isolés électriquement par des petits cylindres 10 en céramique juxtaposés laissant de la flexibilité aux dits fils. La plaque métallique est au départ constituée de plusieurs morceaux assemblés entre eux par des soudures 9. Elle comprend une partie « de fond » située entre la source et la paroi du four, et des parties latérales situées autour du PCR. Cette configuration permet de constituer une sorte de déflecteur barrière entourant la source sauf d'un côté dit ouvert dans la direction représentée par la flèche épaisse qui correspond à la direction vers laquelle on souhaite orienter la puissance de chauffe. Les épaisseurs des composants n'est pas à l'échelle pour des raisons de clarté.

La figure 2 représente une multiplicité d'ensembles source/barrière selon l'invention juxtaposés, pouvant notamment tapisser la voûte ou les parois ou la sole d'un four, c'est-à-dire d'une façon général une « paroi » en céramique réfractaire. Ce dispositif est placé en garniture d'une paroi 21 en céramique réfractaire. Il s'agit d'un système modulable facile à monter ou démonter. Ces ensembles comprennent chacun un PCR 15 source de chaleur (on n'a pas représenté la résistance ni les fils électriques sortant du PCR puis de la plaque) entourée de cinq plaques métalliques : quatre plaques latérales 16 (sur la figure 2 seules deux sont représentées autour de chaque PCR) et une plaque de fond 17. Les plaques latérales servent à deux modules juxtaposés. Dans le cas représenté, chaque plaque est recouverte sur ses deux faces principales 18 et 19 de céramique déposée par plasma spray. Dans le cas représenté, la plaque de fond 17 n'est recouverte que du côté vis-à-vis du PCR. Le revêtement double faces des plaques latérales 16 isole mieux chaque PCR par rapport à ses voisins, ce qui permet de mieux individualiser les températures de chaque module en fonction de sa position par rapport à l'objet à chauffer. L'ensemble du système gagne ainsi en flexibilité et l'on peut donner des puissances différentes aux différents modules juxtaposés. On voit donc que les différentes plaques entourent les sources de chaleur sauf d'un côté dit « ouvert » vers la direction représentée par les flèches vers le bas, direction souhaitée de chauffage. Cet entourage des sources, assez serré sur les côtés latéraux (côtés non-ouverts), crée au dos du PCR (côté également non-ouvert) un matelas d'air 20 relativement confiné qui contribue à l'isolation. On peut donc distinguer un « premier » espace libre 22 entre un « premier » côté de la source et la plaque revêtue au dos du PCR, (lequel va de 2 mm à 100 mm et de préférence de 10 mm à 60 mm), d'autres espaces libres 23 entre la plaque et la source sur les autres côtés non ouverts étant inférieurs audit premier espace libre (notamment inférieurs à 8 mm). On voit par ailleurs qu'il existe une normale 24 à la paroi 21 passant par une plaque puis par une source quand on part de la paroi 21, l'espace entre ladite plaque et la paroi étant libre.

La figure 3 représente le dispositif avec lequel l'efficacité d'un module PCR/barrière selon l'invention a été constatée. Il s'agit d'un four tunnel à l'intérieur duquel des chariots 31 peuvent circuler sur des rails 32. Chaque chariot convoie un cadre de bombage 33 sur lequel est déposée une feuille de verre 34 de 2 mm d'épaisseur. Le chariot représenté est placé sous un module 35 PCR/barrière constitué d'un PCR et d'une plaque située entre le PCR et la paroi 37 en céramique réfractaire du four. Ce module est placé sous la voûte du four qui fait office de paroi 37 en céramique réfractaire. La température du verre est mesurée par un pyromètre 36 au travers d'un orifice ménagé dans la sole du four, et au travers du chariot. Les mesures ont été réalisées à l'équilibre thermique et avec le chariot 31 immobile.

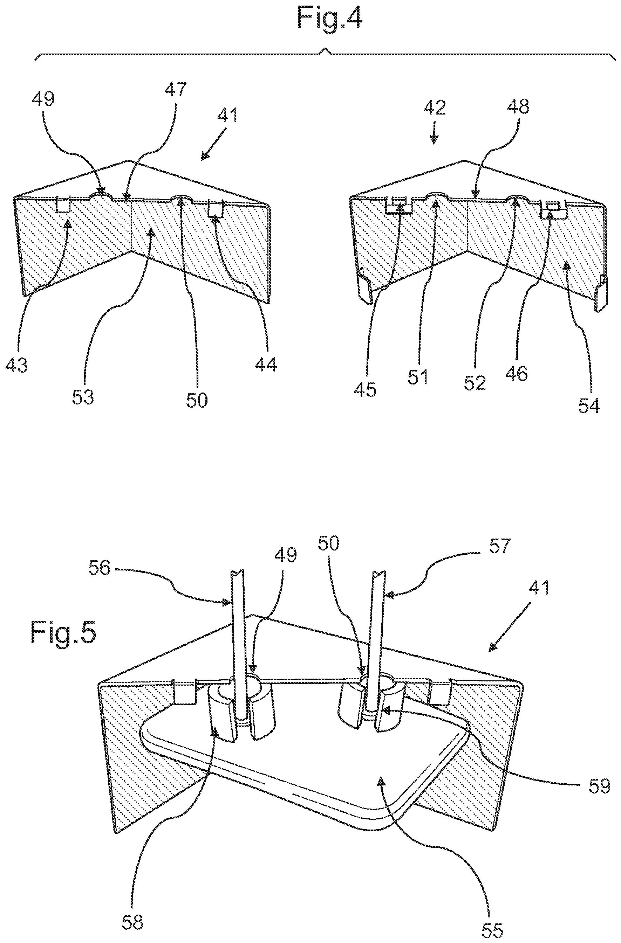

La figure 4 représente une plaque métallique selon l'invention en deux parties 41 et 42 pouvant être assemblées autour d'une source de chaleur. Ces plaques ont été réalisées à partir de tôle plane en acier, découpées, pliées et soudées. L'intérieur 53 et 54 de ces parties de plaque a été revêtu de zircone par plasma spray. Ces deux parties 41 et 42 s'assemblent en insérant les languettes 43 et 44 dans les fentes 45 et 46. A l'assemblage, les bords 47 et 48 sont juxtaposés. Ces bords 47 et 48 comprennent des parties d'orifices (49,50) et (51,52) destinés à former deux orifices circulaires lorsque la plaque est assemblée. Ces deux orifices servent à laisser passer deux tiges de fixation pour relier la source de chaleur à la paroi réfractaire du four.

La figure 5 représente la partie 41 de plaque de la figure 4, montée autour d'une source de chaleur 55 du type pavé céramique radiant. Cette source tient à la paroi du four grâce à deux tiges 56 et 57. Il n'y a plus qu'à placer la partie 42 de la figure 4 en face de la partie 41 (figure 4) pour assembler la plaque autour de la source 55. Les parties d'orifice (49, 50) sont alors complétés par les parties d'orifices (51, 52) pour former deux orifices circulaire autour des tiges de fixation. Un tel dispositif est particulièrement adapté pour être fixé en voûte de four, les tiges de fixation (56, 57) étant alors verticales. Ces tiges retiennent la source de chaleur 55 et la source de chaleur retient la plaque métallique (41, 42). Les entretoises 58 et 59 en alumine frittée assurent une certaine distance entre la source 55 et la plaque (41, 42). Ces entretoises sont des tubes fendus pouvant être disposés autour des tiges grâce à leurs fentes. Ces entretoises assurent la présence d'un matelas d'air isolant entre la source 55 et le côté de la plaque comprenant les orifices pour les tiges. Les tiges peuvent servir à l'alimentation électrique de la source 55. Dans ce cas, dans un but d'isolation électrique, on prévoit deux autres petits tubes en céramique, également fendus, pour entourer les tiges à l'endroit où celles-ci traversent la plaque, ces petits tubes étant placés à l'intérieur des entretoises 58 et 59. La surface interne de la plaque assemblée détermine la forme d'un parallélépipède contenant entièrement la source 55. La plaque entoure donc bien la source. Cette plaque (en deux parties) comprend quatre côtés latéraux et un fond. Elle a un côté « ouvert » pour diriger la chaleur vers le bas.

## Revendications

1. Four de bombage par gravité de feuilles de verre pour chauffer le verre en un emplacement comprenant une paroi en céramique réfractaire et une source de chaleur, **caractérisé en ce qu'**il comprend au moins une plaque métallique en acier inoxydable ou en un métal ou alliage d'un métal réfractaire, ladite plaque étant revêtue d'une couche adhérente d'un matériau céramique sur une de ses faces principales, ladite plaque revêtue étant placée entre ladite paroi et ladite source, la couche adhérente étant située vis-à-vis de la source, le matériau de la couche réfléchissant plus les infra-rouges que celui de la céramique de la paroi.

2. Four selon la revendication précédente, **caractérisé en ce qu'**il existe une normale à la paroi passant par ladite plaque puis par ladite source quand on part de la paroi.

3. Four selon la revendication précédente, **caractérisé en ce que** la normale passe ensuite par l'emplacement.

4. Four selon l'une des revendications précédentes, **caractérisé en ce que** la couche est déposée par torche à plasma ou par évaporation thermique assistée par faisceau d'électrons.

5. Four selon l'une des revendications précédentes **caractérisé en ce que** la surface libre de la couche adhérente est à base de zircone.

6. Four selon l'une des revendications précédentes **caractérisé en ce que** la plaque métallique est alliage de Nickel.

7. Four selon l'une des revendications précédentes **caractérisé en ce que** le matériau de la couche présente une réflexion totale aux infrarouges, supérieure à 30% entre 2 µm et 5 µm.

8. Four selon l'une des revendications précédentes **caractérisé en ce que** la surface du matériau de la couche est à base de zircone ou de zircone dopée, une couche d'accrochage étant éventuellement présente entre la plaque métallique et la couche d'un matériau céramique.

9. Four selon l'une des revendications précédentes **caractérisé en ce que** la source de chaleur comprend une résistance électrique et est notamment un pavé céramique radiant.

10. Four selon l'une des revendications précédentes **caractérisé en ce que** l'espace libre entre un premier côté de la source et la plaque revêtue va de 2 mm à 100 mm.

11. Four selon l'une des revendications précédentes **caractérisé en ce que** la plaque est revêtue d'un matériau céramique sur ses deux faces principales.

12. Four selon l'une des revendications précédentes **caractérisé en ce que** la plaque entoure la source sauf d'un côté dit ouvert.

13. Four selon la revendication précédente, **caractérisé en ce qu'**un premier espace libre entre un premier côté de la source dirigé vers la paroi et la plaque revêtue va de 2 mm à 100 mm et de préférence de 5 mm à 60 mm et **en ce que** les autres espaces libres entre la plaque et la source sur les autres côtés non ouverts sont inférieurs audit premier espace libre, notamment inférieurs à 8 mm.

14. Four selon l'une des revendications précédentes **caractérisé en ce qu'**il comprend une pluralité de modules comprenant chacun une plaque et une source.

15. Four selon la revendication précédente, **caractérisé en ce que** des sources de modules comprennent des résistances électriques alimentées indépendamment l'une de l'autre.

16. Dispositif de chauffage pour chauffer du verre dans un four de bombage de feuilles de verre, notamment du four de l'une des revendications précédentes, comprenant une source de chaleur, une plaque métallique en acier inoxydable ou en un métal ou alliage d'un métal réfractaire, ladite plaque étant revêtue d'une couche adhérente d'un matériau céramique sur une de ses faces principales, la couche adhérente étant située vis-à-vis de la source, ladite plaque entourant ladite source de chaleur, au moins une tige de fixation reliée à la source de chaleur traversant ladite plaque, ladite plaque étant en plusieurs parties et étant assemblable autour de ladite tige de fixation par au moins un orifice, le périmètre dudit orifice appartenant à différentes parties de ladite plaque.

17. Dispositif selon la revendication précédente, **caractérisé en ce que** la source de chaleur est électrique, qu'au moins deux tiges de fixation sont reliées à la source de chaleur et traversent ladite plaque et que les au moins deux tiges conduisent l'électricité consommée par la source de chaleur.

18. Procédé de chauffage d'un objet comprenant une feuille de verre **caractérisé en ce que** le chauffage est assuré par le four ou le dispositif de l'une des revendications précédentes.

19. Procédé selon la revendication précédente **caractérisé en ce que** le chauffage assure le bombage par gravité de la feuille de verre posée sur un cadre de bombage.

20. Procédé selon l'une des revendications de procédé précédentes, **caractérisé en ce que** la plaque métallique revêtue est à une température comprise entre 700 et 1000°C.

## Patentansprüche

1. Schwerkraft-Biegeofen für Glasplatten zum Erhitzen des Glases an einer Stelle, der eine Wand aus feuerfester Keramik und eine Wärmequelle umfasst, **dadurch gekennzeichnet, dass** er mindestens eine Metallplatte aus rostfreiem Stahl oder aus einem Metall oder einer Legierung eines feuerfesten Metalls umfasst, wobei die Platte mit einer haftenden Schicht eines Keramikmaterials auf einer ihrer Hauptseiten beschichtet ist, wobei die beschichtete Platte zwischen der Wand und der Quelle platziert ist, wobei die haftende Schicht gegenüber der Quelle liegt, wobei das Material der Schicht Infrarot mehr reflektiert als das der Keramik der Wand.

2. Ofen nach dem vorhergehenden Anspruch, **dadurch gekennzeichnet, dass** eine Senkrechte zu der Wand existiert, die durch die Platte, dann durch die Quelle verläuft, wenn man von der Wand ausgeht.

3. Ofen nach dem vorhergehenden Anspruch, **dadurch gekennzeichnet, dass** die Senkrechte anschließend durch die Stelle verläuft.

4. Ofen nach einem der vorhergehenden Ansprüche, **dadurch gekennzeichnet, dass** die Schicht durch Plasmabrenner oder durch Wärmeverdampfen unterstützt von einem Elektronenstrahl abgeschieden wird.

5. Ofen nach einem der vorhergehenden Ansprüche, **dadurch gekennzeichnet, dass** die freie Oberfläche der haftenden Schicht auf Zirkoniumoxidbasis ist.

6. Ofen nach einem der vorhergehenden Ansprüche, **dadurch gekennzeichnet, dass** die metallische Platte eine Nickellegierung ist.

7. Ofen nach einem der vorhergehenden Ansprüche, **dadurch gekennzeichnet, dass** das Material der Schicht eine Infrarot-Totalreflexion größer als 30 % zwischen 2 µm und 5 µm aufweist.

8. Ofen nach einem der vorhergehenden Ansprüche, **dadurch gekennzeichnet, dass** die Oberfläche des Materials der Schicht auf der Basis von Zirkoniumoxid oder dotiertem Zirkoniumoxid ist, wobei eine Bindungsschicht eventuell zwischen der metallischen Platte und der Schicht eines keramischen Materials vorhanden ist.

9. Ofen nach einem der vorhergehenden Ansprüche, **dadurch gekennzeichnet, dass** die Wärmequelle einen elektrischen Widerstand umfasst und insbesondere ein strahlender Keramikklotz ist.

10. Ofen nach einem der vorhergehenden Ansprüche, **dadurch gekennzeichnet, dass** der freie Raum zwischen einer ersten Seite der Quelle und der beschichteten Platte von 2 mm bis 100 mm reicht.

11. Ofen nach einem der vorhergehenden Ansprüche, **dadurch gekennzeichnet, dass** die Platte mit einem Keramikmaterial auf ihren zwei Hauptseiten beschichtet ist.

12. Ofen nach einem der vorhergehenden Ansprüche, **dadurch gekennzeichnet, dass** die Platte die Quelle mit Ausnahme einer offen genannten Seite umgibt.

13. Ofen nach dem vorhergehenden Anspruch, **dadurch gekennzeichnet, dass** ein erster freier Raum zwischen einer ersten Seite der Quelle, die zu der Wand gerichtet ist, und der beschichteten Platte von 2 mm bis 100 mm reicht, und bevorzugt von 5 mm bis 60 mm, und dass die anderen freien Räume zwischen der Platte und der Quelle auf den anderen nicht offenen Seiten kleiner sind als der erste freie Raum, insbesondere kleiner als 8 mm.

14. Ofen nach einem der vorhergehenden Ansprüche, **dadurch gekennzeichnet, dass** er eine Mehrzahl von Modulen umfasst, die jeweils eine Platte und eine Quelle umfassen.

15. Ofen nach dem vorhergehenden Anspruch, **dadurch gekennzeichnet, dass** Quellen von Modulen elektrische Widerstände umfassen, die unabhängig voneinander versorgt sind.

16. Heizvorrichtung zum Heizen des Glases in einem Glasplatten-Biegeofen, insbesondere des Ofens eines der vorhergehenden Ansprüche, die eine Wärmequelle, eine metallische Platte aus rostfreiem Stahl oder aus einem Metall oder einer Legierung eines feuerfesten Metalls, umfasst, wobei die Platte mit einer haftenden Schicht eines Keramikmaterials auf einer ihrer Hauptseiten beschichtet ist, wobei die haftende Schicht gegenüber der Quelle liegt, wobei die Platte die Wärmequelle umgibt, wobei mindestens ein Befestigungsschaft, der mit der Wärmequelle verbunden ist, die Platte durchquert, wobei die Platte aus mehreren Teilen besteht und um den Befestigungsschaft durch mindestens eine Öffnung zusammenfügbar ist, wobei der Umfang der Öffnung zu unterschiedlichen Teilen der Platte gehört.

17. Vorrichtung nach dem vorhergehenden Anspruch, **dadurch gekennzeichnet, dass** die Wärmequelle elektrisch ist, dass mindestens zwei Befestigungsschäfte mit der Wärmequelle verbunden sind und die Platte durchqueren, und dass die mindestens zwei Schäfte Elektrizität, die von der Wärmequelle verbraucht wird, leiten.

18. Verfahren zum Heizen eines Objekts, das eine Glasplatte umfasst, **dadurch gekennzeichnet, dass** das Heizen von dem Ofen oder von der Vorrichtung eines der vorhergehenden Ansprüche sichergestellt wird.

19. Verfahren nach dem vorhergehenden Anspruch, **dadurch gekennzeichnet, dass** das Heizen das Biegen durch Schwerkraft der Glasplatte, die auf einem Biegerahmen liegt, sicherstellt.

20. Verfahren nach einem der vorhergehenden Verfahrensansprüche, **dadurch gekennzeichnet, dass** die beschichtete Metallplatte eine Temperatur zwischen 700 und 1000 °C hat.

## Claims

1. A furnace for bending glass sheets by gravity, for heating the glass in a space comprising a refractory ceramic wall and a heat source, **characterized in that** it comprises at least one metal plate made of stainless steel or a metal or alloy of a refractory metal, said plate being coated with an adherent layer of a ceramic material on one of its principal faces, said plate being placed between said wall and said source, the adherent layer being situated facing the source, the material of the layer reflecting infrared more than that of the wall.

2. The furnace as claimed in the preceding claim, **characterized in that** a normal to the wall exists passing through said plate and then through said source when leaving the wall.

3. The furnace as claimed in the preceding claim, **characterized in that** the normal then passes through the space.

4. The furnace as claimed in one of the preceding claims, **characterized in that** the layer is deposited by plasma spray or by electron beam evaporation.

5. The furnace as claimed in one of the preceding claims, **characterized in that** the free surface of the adherent layer is based on zirconia.

6. The furnace as claimed in one of the preceding claims, **characterized in that** the metal plate is made of nickel alloy.

7. The furnace as claimed in one of the preceding claims, **characterized in that** the material of the layer has a total reflection to infrared greater than 30% between 2 µm and 5 µm.

8. The furnace as claimed in one of the preceding claims, **characterized in that** the surface of the material of the layer is based on zirconia or doped zirconia, a tie layer being as the case may be present between the metal plate and the layer of a ceramic material.

9. The furnace as claimed in one of the preceding claims, **characterized in that** the heat source comprises an electrical resistance and is notably a radiant ceramic panel.

10. The furnace as claimed in one of the preceding claims, **characterized in that** the free space between a first side of the source and the coated plate extends from 2 mm to 100 mm.

11. The furnace as claimed in one of the preceding claims, **characterized in that** the plate is coated with a ceramic material on its two principal faces.

12. The furnace as claimed in one of the preceding claims, **characterized in that** the plate surrounds the source except on a side known as the open side.

13. The furnace as claimed in the preceding claim, **characterized in that** a first free space between a first side of the source directed toward the wall and the coated plate extends from 2 mm to 100 mm and preferably from 5 mm to 60 mm, and **in that** the other free spaces between the plate and the source on the other non-open sides are less than said free space, notably less than 8 mm.

14. The furnace as claimed in one of the preceding claims, **characterized in that** it comprises a plurality of modules, each comprising a plate and a source.

15. The furnace as claimed in the preceding claim, **characterized in that** the sources of modules comprise electrical resistances supplied independently of each other.

16. A heating device for heating glass in a furnace for bending glass sheets, in particular the furnace according to one of the preceding claims, comprising a heat source, a metal plate made of stainless steel or a metal or alloy of a refractory metal, said plate being coated with an adherent layer of a ceramic material on one of its principal faces, the adherent layer being situated facing the source, said plate surrounding said heat source, at least one fixing rod connected to the heat source passing through said plate, said plate being in several parts and being able to be assembled around said fixing rod by at least one orifice, the perimeter of said orifice belonging to various parts of said plate.

17. The device as claimed in the preceding claim, **characterized in that** the heat source is electric, that at least two fixing rods are connected to the heat source and pass through said plate and that the at least two rods conduct electricity consumed by the heat source.

18. A method for heating an object comprising a glass sheet **characterized in that** heating is provided by the furnace or the device of one of the preceding claims.

19. The method as claimed in the preceding claim **characterized in that** the heating ensures gravity bending of the glass sheet placed on a bending frame.

20. The method as claimed in one of the preceding claims **characterized in that** the coated metal plate is at a temperature between 700 and 1000°C.
